(19) **Europäisches Patentamt**
**European Patent Office**
**Office européen des brevets**

(11) **EP 4 327 155 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **22713589.4**

(22) Anmeldetag: **08.03.2022**

(51) Internationale Patentklassifikation (IPC):
*G02B 27/00* (2006.01)    *G02B 27/01* (2006.01)

(52) Gemeinsame Patentklassifikation (CPC):
**G02B 27/0093; G02B 27/0172; G06F 3/013; G06F 3/017**

(86) Internationale Anmeldenummer:
**PCT/EP2022/055805**

(87) Internationale Veröffentlichungsnummer:
**WO 2022/223192 (27.10.2022 Gazette 2022/43)**

(54) **VERFAHREN ZUM ERKENNEN VON AUGENGESTEN EINES AUGES**

METHOD FOR DETECTING GESTURES OF AN EYE

PROCÉDÉ DE DÉTECTION DE MOUVEMENTS OCULAIRES D'UN OEIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2021 DE 102021110109**

(43) Veröffentlichungstag der Anmeldung:
**28.02.2024 Patentblatt 2024/09**

(73) Patentinhaber: **Robert Bosch GmbH**
**70839 Gerlingen (DE)**

(72) Erfinder:
• **PETERSEN, Andreas**
**70469 Stuttgart (DE)**
• **SCHLEBUSCH, Thomas Alexander**
**70469 Stuttgart (DE)**
• **MEYER, Johannes**
**70469 Stuttgart (DE)**
• **SPRUIT, Hans**
**89081 Ulm (DE)**
• **HELLMIG, Jochen**
**89081 Ulm (DE)**

(74) Vertreter: **Hoefer & Partner Patentanwälte mbB**
**Pilgersheimer Straße 20**
**81543 München (DE)**

(56) Entgegenhaltungen:
WO-A1-2020/043472    DE-A1- 102020 206 822
US-A1- 2017 276 934    US-B1- 10 860 098
US-B1- 8 824 779

**Beschreibung**

Stand der Technik

Die vorliegende Erfindung betrifft ein Verfahren zum Erkennen von Augengesten eines Auges sowie eine Datenbrille.

Bekannt ist die Verwendung von Blickverfolgung oder Blickerfassung (auch: Okulografie, engl.: eye-tracking) zur Ermittlung von Augenbewegungen und zur Abschätzung einer Blickrichtung. Durch eine Nachverfolgung der Blickrichtung können dabei Augengesten erkannt werden. Bekannte Systeme basieren häufig auf der Erfassung von Informationen über die Augenposition mittels kamerabasierter Systeme, oder elektrischer oder elektromagnetischer Sensoren im Bereich des Auges. Außerdem sind gescannte Lasersysteme bekannt, welche beispielsweise mittels Mikrospiegel einen Laserspot über das Auge scannen. Alle diese Systeme weisen üblicherweise eine hohe Komplexität und einen hohen Energieverbrauch bei eingeschränkter zeitlicher Auflösung auf.

WO 2020/043472 A1 zeigt ein bekanntes Verfahren zum Ermitteln einer Blickrichtung eines Auges.

Offenbarung der Erfindung

Das erfindungsgemäße Verfahren mit den Merkmalen des Anspruchs 1 zeichnet sich demgegenüber durch eine besonders energiesparende und kostengünstige Möglichkeit zur Erkennung von Augengesten aus. Dies wird erreicht durch ein Verfahren zum Erkennen von Augengesten. Das Verfahrens umfasst dabei die Schritte:

- Einstrahlen von zumindest einem Laserstrahl auf das Auge;
- Ermitteln eines einzelnen Messsamples mit momentanen Werten für: eine optische Weglänge des ausgesendeten Laserstrahls, ein Signal-Rausch-Verhältnis einer vom Auge zurückgestreuten Strahlung, und eine Augengeschwindigkeit des Auges; und
- Erkennen einer Augengeste basierend auf dem einzelnen Messsample.

Die optische Weglänge wird dabei basierend auf Laser-Feedback-Interferometrie der ausgesendeten Laserstrahlung mit der vom Auge zurückgestreuten Strahlung ermittelt. Zudem wird die Augengeschwindigkeit basierend auf einer mittels der Laser-Feedback-Interferometrie ermittelten Dopplerverschiebung der ausgesendeten und der zurückgestreuten Strahlung ermittelt.

Mit anderen Worten wird zur Erkennung der Augengesten ein Laserstrahl, welcher insbesondere von einer Laserquelle ausgesendet wird, auf ein Auge eines Benutzers eingestrahlt. Der Laserstrahl wird dabei am Auge zumindest teilweise zurückgestreut. Als zurückgestreute Strahlung wird dabei derjenige Anteil der am Auge gestreuten Strahlung angesehen, welcher parallel zum ausgesendeten Laserstrahl ist und sich somit mit diesem überlagern kann. Dieser zurückgestreute Anteil interferiert mit der einfallenden, also mit der zum Auge hin propagierenden Laserstrahlung. Durch die sogenannte Laser-Feedback-Interferometrie erfolgt eine Überlagerung des ausgesendeten Laserstrahls mit der zurückgestreuten Strahlung, sodass eine resultierende Interferenz-Strahlung vorliegt. Diese resultierende Interferenz-Strahlung kann beispielsweise mittels eines Detektors erfasst und analysiert werden.

Dabei wird basierend auf der Laser-Feedback-Interferometrie eine optische Weglänge des ausgesendeten Laserstrahls ermittelt. Als optische Weglänge wird eine Strecke, welche der ausgesendete Laserstrahl von der Laserquelle bis zum Auge zurücklegt, angesehen. Das heißt, sofern der Laserstrahl von einer Laserquelle direkt auf das Auge eingestrahlt wird, entspricht die optische Weglänge der Distanz zwischen Laserquelle und Auge. Beispielsweise kann bei bekannter Wellenlänge der ausgesendeten Laserstrahlung anhand einer konstruktiven oder destruktiven Interferenz die optische Weglänge abgeschätzt werden.

Vorzugsweise wird als Laserstrahl ein wellenlängenmodulierter Laserstrahl, besonders bevorzugt als in der Wellenlänge dreiecksmoduliertes Laserlicht, ausgesendet. Durch Analyse der interferierenden ausgesendeten und zurückgestreuten Strahlung, insbesondere durch Berechnung eines Mittels der resultierenden Strahlung bezüglich der beiden Flanken des dreiecksmodulierten Signals, kann besonders einfach die optische Weglänge und Richtung der Augengeschwindigkeit bestimmt werden.

Weiterhin erfolgt, sofern eine Bewegung des Auges relativ zu der eingestreuten Laserstrahlung vorliegt, eine Dopplerverschiebung der ausgesendeten und der zurückgestreuten Strahlung aufgrund des Doppler-Effekts. Mittels der Laser-Feedback-Interferometrie kann diese Dopplerverschiebung erfasst werden. Anhand der Dopplerverschiebung kann anschließend die Augengeschwindigkeit ermittelt werden. Als Augengeschwindigkeit wird dabei eine tangentiale Geschwindigkeit eines Punktes auf der Augenoberfläche, wobei dieser Punkt demjenigen Punkt entspricht, in welchem die Laserstrahlung auf die Augenoberfläche auftrifft, angesehen. Vorzugsweise umfasst die Augengeschwindigkeit einen Absolutwert für die aktuelle Geschwindigkeit, sowie eine Richtung der aktuellen Geschwindigkeit.

Zusätzlich wird das Signal-Rausch-Verhältnis der zurückgestreuten Strahlung erfasst. Beispielsweise kann anhand des Signal-Rausch-Verhältnisses eine Reflektivität der streuenden Oberfläche ermittelt werden. Die Reflektivität ist insbesondere unterschiedlich für verschiedene Bereiche des Auges. Insbesondere ändert sich die ermittelte Reflektivität, wenn der Laserstrahl auf anatomische unterschiedliche Bereiche des Auges, wie beispielsweise die Iris oder die Pupille, oder ein Augenlid trifft. Dadurch kann beispielsweise abgeschätzt werden, welcher Bereich des Auges gerade vom Laserstrahl bestrahlt wird.

Die Werte für die optische Weglänge, das Signal-Rausch-Verhältnis und die Augengeschwindigkeit werden dabei gleichzeitig ermittelt und zu dem einzelnen Messsample zusammengefasst. Anhand des einzelnen Messsamples, welches somit diese spezifischen Größen für genau einen vordefinierten Zeitpunkt umfasst, wird bei dem Verfahren die Augengeste erkannt.

Das Verfahren bietet den Vorteil, dass bereits anhand eines einzelnen Messsamples Augengesten erkannt werden können. Das heißt, es ist keine Nachverfolgung, beispielsweise einer Blickrichtung oder einer Augenposition, über einen bestimmten Zeitraum erforderlich, sondern es kann anhand des zu genau einem bestimmten Zeitpunkt aufgenommenen Messsamples abgeschätzt werden, welche Augengeste gerade ausgeführt wird. Eine Latenz der Erkennung bezüglich der von einem Benutzer ausgeführten Augengeste kann mittels des Verfahrens insbesondere Null oder sogar negativ sein, das heißt, bereits vor Vollendung der Augengeste kann diese abgeschätzt bzw. vorhergesagt werden. Das Verfahren erlaubt somit auf besonders einfache und effiziente Art und Weise eine Erkennung von Augengesten mit besonders hohem Benutzerkomfort. Die spezielle Art der Erkennung der Augengesten mittels Laser-Feedback-Interferometrie bietet dabei den Vorteil einer besonders hohen zeitlichen Abtastrate, sodass die Augengesten zeitlich besonders hoch aufgelöst erkannt werden kann. Zudem bietet das Verfahren den Vorteil, dass einfache und kostengünstige Komponenten, welche einen niedrigen Energiebedarf haben, verwendet werden können. Dabei ist es zudem vorteilhaft, dass keine beweglichen Bauteile, wie beispielsweise Scanvorrichtungen, erforderlich sind, wodurch flexible und robuste Einsatzmöglichkeiten zur Verfügung stehen.

Die Unteransprüche haben bevorzugte Weiterbildungen der Erfindung zum Inhalt.

Bevorzugt erfolgt bei dem Verfahren eine Erkennung vordefinierter Basis-Augengesten basierend auf einer Interpretation des Messsamples mittels eines Entscheidungsbaums. Die vordefinierten Basis-Augengesten umfassen vorzugsweise die folgenden Augengesten: Auge bewegt sich nach oben, Auge bewegt sich nach unten, Auge bewegt sich nach links, Auge bewegt sich nach rechts, Stillstand des Auges, Auge ist geschlossen, Blinzeln. Besonders bevorzugt können die genannten Augengesten durch eine zusätzliche Unterscheidung von Geschwindigkeit und/oder Dauer der ausgeführten Augengeste weiter aufgeschlüsselt werden. Vorzugsweise umfasst der Entscheidungsbaum mehrere Vergleichsoperatoren, mit welchen jeweils zumindest einer der drei Bestandteile des Messsamples analysiert und kategorisiert wird. Durch den Entscheidungsbaum kann ein besonders einfacher und effizienter Algorithmus zur Erkennung der Augengesten bereitgestellt werden.

Besonders bevorzugt werden vordefinierte komplexe Augengesten mittels eines Zustandsautomats erkannt. Eine komplexe Augengeste ist dabei durch eine vorbestimmte Reihenfolge mehrerer aufeinanderfolgender Basis-Augengesten definiert. Ein Beispiel für eine komplexe Augengeste ist eine Aneinanderreihung der folgenden Basis-Augengesten: Auge bewegt sich nach rechts, Auge bewegt sich nach links, Blinzeln. Dadurch kann auf besonders einfache und kostengünstig zu implementierende Weise ein effizienter Algorithmus bereitgestellt werden, mit dem beliebige, beispielsweise vom Benutzer programmierbare komplexe Augengesten erkannt werden können. Diese Erkennung der komplexen Augengesten kann beispielsweise vorteilhaft genutzt werden, um eine Datenbrille zu betätigen, vorzugsweise um Befehle zu steuern, wie einen Anruf zu tätigen.

Vorzugsweise werden bei dem Verfahren basierend auf der optischen Weglänge und/oder basierend auf dem Signal-Rausch-Verhältnis die folgenden vordefinierten Basis-Zustände unterschieden:

- Laserstrahl trifft auf Augenlid,
- Laserstrahl trifft auf Augenoberfläche oder Iris,
- Laserstrahl trifft auf Retina.

Vorzugsweise können diese Basis-Zustände dabei durch Vergleich der jeweiligen ermittelten zugehörigen Werte für optische Weglänge und/oder Signal-Rausch-Verhältnis unterschieden werden. Durch Unterscheidung dieser Basis-Zustände können Augengesten besonders einfach und zuverlässig erkannt werden, da diese Basis-Zustände insbesondere signifikant unterschiedliche Messsamples erzeugen.

Weiter bevorzugt werden die vordefinierten Basis-Zustände zusätzlich basierend auf anatomischen Randbedingungen eines menschlichen Auges unterschieden. Als anatomische Randbedingungen werden bekannte übliche Abmessungen des menschlichen Auges angesehen, welche sich für die genannten Basis-Zustände eindeutig aufgrund anatomischer Gegebenheiten unterscheiden. Vorzugsweise wird hierbei basierend auf der ermittelten optischen Weglänge unterschieden, welcher der Basis-Zustände vorliegt. Besonders bevorzugt unterscheiden sich hierbei die Zustände Laserstrahl trifft auf Augenlid und Laserstrahl trifft auf Augenoberfläche oder Iris um etwa 1 mm. Die Zustände Laserstrahl trifft auf Augenoberfläche und Laserstrahl trifft auf Retina unterscheiden sich um etwa 24 mm, was beispielsweise in etwa dem Augendurchmesser des Auges entspricht. Somit kann besonders einfach und zuverlässig erkannt werden, welcher der Basis-Zustände vorliegt. Insbesondere ist dabei eine exakte Messung und aufwändige Analyse der aktuell erfassten optischen Weglänge nicht erforderlich, sondern eine Abschätzung und ein ins Verhältnis setzen mit für bereits bekannte Basis-Zustände ermittelten Werten kann ausreichend sein.

Vorzugsweise umfasst das Verfahren ferner die Schritte:

- Kalibrieren durch Aufzeichnen jeweils eines Kalibrier-Signal-Rausch-Verhältnisses für jeden der drei vordefinierten Basis-Zustände, und
- Plausibilisieren des ermittelten Messsamples durch Abgleichen des aktuellen Signal-Rausch-Verhältnisses mit den Kalibrier-Signal-Rausch-Verhältnissen.

Mit anderen Worten wird vor dem Erkennen von Augengesten das Kalibrieren durchgeführt, wobei für jeden der drei vordefinierten Basis-Zustände jeweils ein Kalibrier-Signal-Rausch-Verhältnis erfasst, und vorzugsweise gespeichert, wird. Anschließend kann, wenn das Erkennen der Augengesten anhand eines bestimmten Messsamples durchgeführt werden soll, das Signal-Rausch-Verhältnisses dieses Messsamples anhand der drei Kalibrier-Signal-Rausch-Verhältnisse plausibilisiert werden. Insbesondere kann dabei das aktuelle Messsample verworfen bzw. als fehlerhaft gekennzeichnet werden, wenn das Plausibilisieren fehlschlägt, das heißt, wenn es nicht möglich ist, das aktuelle Signal-Rausch-Verhältnis auf eines der drei Kalibrier-Signal-Rausch-Verhältnisse zu "matchen". Dadurch kann eine besonders präzise Verarbeitung der Messsamples, um Augengesten besonders zuverlässig erkennen zu können, durchgeführt werden. Das Plausibilisieren anhand des Signal-Rausch-Verhältnisses ist besonders vorteilhaft, da dieses insbesondere unabhängig von einer Entfernung der Laserquelle zum Auge ist, sodass beispielsweise ein Rutschen der Datenbrille relativ zum Auge keinen Einfluss hat.

Besonders bevorzugt umfasst das Verfahren ferner die Schritte:

- Vergleichen der Augengeschwindigkeit mit einer ersten Augengeschwindigkeit, und
- Erkennen eines Stillstands des Auges, oder alternativ eines durch ein Augenlid geschlossenen Auges, wenn die Augengeschwindigkeit des Messsamples kleiner oder gleich der ersten Augengeschwindigkeit ist.

Mit anderen Worten wird festgestellt, dass, wenn die Geschwindigkeit Null oder sehr klein ist, das Auge entweder durch das Augenlid geschlossen ist, oder alternativ geöffnet ist und sich nicht bewegt. Vorzugsweise beträgt die erste Geschwindigkeit 0,5 m/s. Bevorzugt können diese beiden Fälle, also Stillstand oder geschlossenes Auge, zusätzlich basierend auf der optischen Weglänge und/oder dem Signal-Rausch-Verhältnis unterschieden werden.

Bevorzugt umfasst das Verfahren ferner die Schritte:

- Vergleichen der Augengeschwindigkeit mit einer ersten Geschwindigkeit, und
- Erkennen einer Bewegung des Auges oder eines Blinzelns, wenn die Augengeschwindigkeit größer als die erste Geschwindigkeit ist. Vorzugsweise entspricht diese erste Geschwindigkeit hierbei der im vorhergehenden Absatz genannten ersten Geschwindigkeit. Besonders bevorzugt können die beiden Fälle, also Bewegung des Auges oder Blinzeln, zusätzlich basierend auf der optischen Weglänge und/oder dem Signal-Rausch-Verhältnis unterschieden werden.

Weiter bevorzugt umfasst das Verfahren ferner die Schritte:

- Vergleichen der Augengeschwindigkeit mit einer zweiten Augengeschwindigkeit, welche vorzugsweise größer als die erste Augengeschwindigkeit ist, und
- wenn die Augengeschwindigkeit kleiner oder gleich der zweiten Geschwindigkeit ist: Erkennen einer langsamen Augenbewegung des Auges, oder
- wenn die Augengeschwindigkeit größer als die zweite Geschwindigkeit ist:
  Erkennen einer schnellen Augenbewegung des Auges.

Schnelle Augenbewegung bzw. langsame Augenbewegung können somit eine Unterklassifikation jeder der Basis-Augenbewegungen, welche eine Bewegung des Auges enthalten, darstellen, um eine noch größere Anzahl an vordefinierten Augenbewegungen mittels des Verfahrens erkennen zu können. Vorzugsweise beträgt die erste Augengeschwindigkeit 0,5 m/s.

Besonders bevorzugt werden bei dem Verfahren zwei Laserstrahlen auf das Auge eingestrahlt. Ein erster dieser beiden Laserstrahlen wird dabei so auf das Auge eingestrahlt, dass dieser einen Anteil parallel zu einer ersten Rotationsachse des Auges aufweist, um eine erste Augengeschwindigkeit entlang dieser ersten Rotationsachse zu erfassen. Ein zweiter Laserstrahl wird zudem so auf das Auge eingestrahlt, dass dieser einen Anteil parallel zu einer zweiten Rotationsachse des Auges, welche vorzugsweise senkrecht zur ersten Rotationsachse ist, aufweist, um eine zweite Augengeschwindigkeit des Auges entlang der zweiten Rotationsachse zu erfassen. Dadurch können vordefinierte Augengesten besonders einfach und zuverlässig unterschieden werden.

Bevorzugt umfasst das Verfahren ferner den Schritt:

- Ermitteln eines Augenwinkels ε basierend auf der Gleichung:

$$\varepsilon = \arctan\left(\frac{v\theta}{v\varphi}\right),$$

mit der ersten Augengeschwindigkeit vθ und der zweiten Augengeschwindigkeit vφ. Insbesondere erfolgt somit eine Verarbeitung der Messdaten in Polarkoordinaten.

Vorzugsweise werden anhand des Augenwinkels ε die folgenden Augengesten unterschieden:

- Auge bewegt sich nach oben, wenn der Augenwinkel ε größer gleich 45° und kleiner als 135° ist,
- Auge bewegt sich nach unten, wenn der Augenwinkel ε größer gleich 225° und kleiner als 315° ist,
- Auge bewegt sich nach links, wenn der Augenwinkel ε größer gleich 135° und kleiner als 225° ist,
- Auge bewegt sich nach rechts, wenn der Augenwinkel ε größer gleich 315° oder kleiner als 45° ist.

Durch die Verarbeitung in Polarkoordinaten können somit anhand der beschriebenen Klassifizierung besonders einfach die Bewegungen des Auges in die verschiedenen Richtungen erkannt werden. Vorzugsweise können die beschriebenen Winkelbereiche auch noch weiter aufgeschlüsselt werden, um einen noch größere Anzahl an Augengesten unterscheiden zu können, wie beispielweise Auge bewegt sich nach links-oben. Besonders bevorzugt sind die Winkelbereiche so aufgeschlüsselt, um insgesamt 8 oder 16 vordefinierte Bewegungsrichtung unterscheiden zu können.

Bevorzugt umfasst das Verfahren ferner den Schritt:

- Ermitteln eines Betrags v der Augengeschwindigkeit basierend auf der Gleichung:

$$v = \sqrt{v\theta^2 + v\varphi^2},$$

mit der ersten Augengeschwindigkeit vθ und der zweiten Augengeschwindigkeit vφ.

Weiter bevorzugt wird das Verfahren zum Betreiben einer Datenbrille verwendet, und umfasst ferner den Schritt:

- Erkennen eines Bewegens der Datenbrille relativ zum Auge basierend auf der optischen Weglänge von zumindest zwei Messsamples. Das heißt, anhand mindestens zweier zu verschiedenen Zeitpunkten aufgenommenen Messsamples wird erkannt, ob sich die Datenbrille relativ zum Auge bewegt hat, beispielsweise durch ein Rutschen der Datenbrille am Kopf des Benutzers. Bevorzugt kann dabei eine Kompensation der ermittelten optischen Weglänge basierend auf der durch das Bewegen der Datenbrille relativ zum Auge verursachten Änderung durchgeführt werden, insbesondere um bei einem weiteren Verrutschen eine Fehlinterpretation späterer Messsamples zu vermeiden.

Weiterhin führt die Erfindung zu einer Datenbrille, welche eine Blickerfassungsanordnung zum Ermitteln einer Augenbewegung eines Auges umfasst. Die Blickerfassungsanordnung umfasst eine Laservorrichtung, welche eingerichtet ist, zumindest einen Laserstrahl auf das Auge einzustrahlen, und eine Steuervorrichtung, welche eingerichtet ist, die Laservorrichtung zu betätigen. Die Datenbrille ist dabei eingerichtet, das beschriebene Verfahren auszuführen. Die Datenbrille zeichnet sich dabei durch einen besonders einfachen und kostengünstigen Aufbau auf, welcher eine hohe Erfassungsrate der Augenbewegungen und einen niedrigen Energiebedarf aufweist.

Bevorzugt weist die Laservorrichtung zumindest einen Oberflächenemitter (auch genannt: vertical-cavity surface-emitting laser, kurz VCSEL) mit integrierter Fotodiode auf. Mit einer solchen Laservorrichtung können die Blickbewegungen bei besonders einfachem, kompaktem und kostengünstigem Aufbau der Blickerfassungsanordnung basierend auf der Laser-Feedback-Interferometrie erfasst werden. Insbesondere eignet sich eine solche Laservorrichtung zur Erfassung mittels des self-mixing-Effekts. Vorzugsweise wird hierbei mittels der Fotodiode die Überlagerung der ausgesendeten und zurückgestreuten Strahlung direkt innerhalb der Laserkavität erfasst. Besonders bevorzugt kann die Laservorrichtung mehrere Obenflächenemitter aufweisen, welche jeweils einen Laserstrahl aussenden.

Vorzugsweise ist der zumindest eine Oberflächenemitter mit integrierter Fotodiode an einem Brillengestell und/oder an einem Brillenbügel angeordnet. Als Brillengestell wird dabei insbesondere ein ein Brillenglas umgebender Bereich der Datenbrille angesehen, wobei als Brillenbügel insbesondere ein mit dem Brillengestell verbundener Haltebügel, welcher sich beispielsweise zu einem Ohr des Benutzers erstreckt, angesehen wird. Beispielsweise können mehrere Oberflächenemitter mit integrierter Fotodiode rings um das Brillenglas verteilt am Brillengestell angeordnet sein, wodurch eine besonders genaue Abtastung des Auges über dessen gesamten Bewegungsspielraum ermöglicht werden kann.

Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:

Figur 1    eine vereinfachte schematische Ansicht einer Blickerfassungsanordnung zur Erkennung von Augengesten gemäß einem bevorzugten Ausführungsbeispiel der Erfindung,

Figur 2    eine vereinfachte schematische Darstellung von Messdaten der Blickerfassungsanordnung der Figur 1 bei dessen Betrieb,

Figur 3    eine vereinfachte schematische Ansicht von mittels der Blickerfassungsanordnung der Figur 1 erkennbaren Augengesten,

Figur 4    eine weitere Ansicht von mittels der Blickerfassungsanordnung der Figur 1 erkennbaren Augengesten,

Figur 5    eine weitere vereinfachte schematische Darstellung von Messdaten beim Betrieb der Blickerfassungsanordnung der Figur 1,

Figur 6    eine Ansicht eines Entscheidungsbaums, mittels welchem die Augengesten erkannt werden,

Figur 7    eine schematische Ansicht eines Zustandsautomats, mittels welchem komplexe Augengesten erkannt werden,

Figur 8    eine weitere vereinfachte schematische Darstellung von Messdaten beim Betrieb der Blickerfassungsanordnung der Figur 1,

Figur 9    eine vereinfachte schematische Ansicht einer Filterung von Messdaten, und

Figur 10   eine vereinfachte schematische Ansicht einer Datenbrille mit der Blickerfassungsanordnung der Figur 1.

Bevorzugte Ausführungsformen der Erfindung

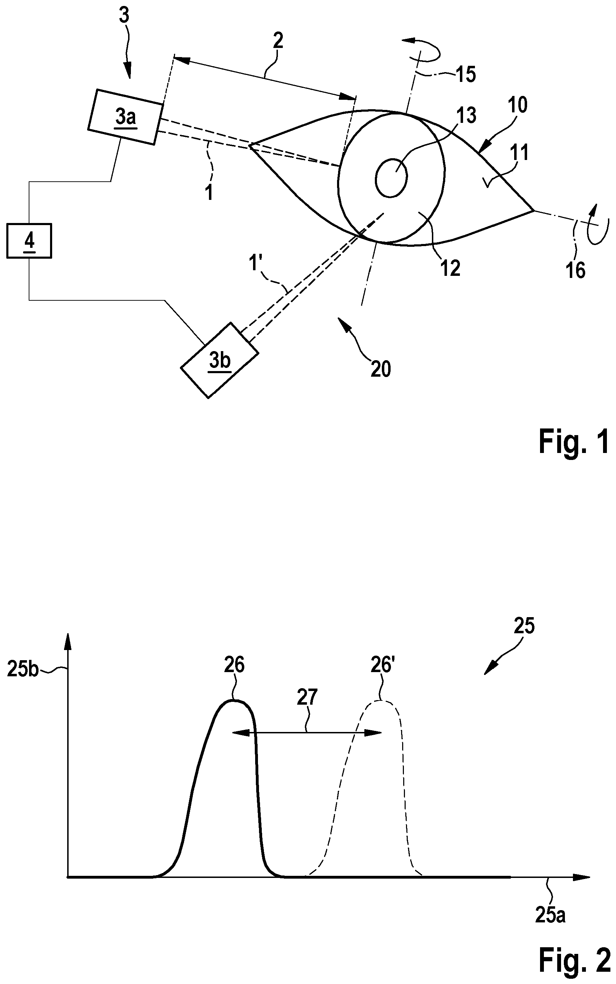

Figur 1 zeigt eine vereinfachte schematische Ansicht einer Blickerfassungsanordnung 20 gemäß einem bevorzugten Ausführungsbeispiel der Erfindung. Die Blickerfassungsanordnung 20 umfasst eine Laservorrichtung 3, welche zwei Oberflächenemitter 3a, 3b mit integrierter Fotodiode aufweist. Jeder der Oberflächenemitter 3a, 3b ist eingerichtet, einen Laserstrahl 1, 1' auf ein Auge 10 einzustrahlen.
Die Blickerfassungsanordnung 20 umfasst ferner eine Steuervorrichtung 4, welche eingerichtet ist, die Oberflächenemitter 3a, 3b zu betätigen. Die Blickerfassungsanordnung 20 ist dabei Teil einer (nicht dargestellten Datenbrille), welche eingerichtet ist, ein Verfahren zur Erkennung von Augengesten des Auges 10 durchzuführen.
Die Durchführung des Verfahrens zur Erkennung der Augengesten wird nachfolgend im Detail beschrieben.
Zunächst wird der Laserstrahl 1, 1' auf das Auge 10 eingestrahlt. An der Augenoberfläche 11 wird der Laserstrahl 1, 1' zumindest teilweise zurückgestreut. Dabei erfolgt eine Überlagerung des eingestrahlten Laserstrahls 1, 1' mit dem parallel in Richtung des Obenflächenemitters 3a, 3b zurück propagierenden Anteil der zurückgestreuten Strahlung. Mittels des Obenflächenemitters 3a, 3b und der in den Oberflächenemitter 3a, 3b integrierten Fotodiode wird eine Laser-Feedback-Interferometrie durchgeführt, um die resultierende Interferenz-Strahlung, also die Überlagerung aus eingestrahlter Laserstrahlung 1, 1' und in die entgegengesetzte Richtung zurückgestreute Strahlung, zu erfassen. Da die Fotodiode direkt in die Laserkavität des Oberflächenemitters 3a, 3b integriert ist, erfolgt die Erfassung der resultierenden Laserintensitätsvariation bzw. -modulation hier mittels des sogenannten Self-Mixing-Effekts.
Ein beispielhaftes Frequenzspektrum 25 der resultierenden Interferenz-Strahlung, welche mittels der integrierten Fotodiode des Oberflächenemitters 3a, 3b erfasst werden kann, ist in Figur 2 vereinfacht schematisch dargestellt. Die Achse 25a entspricht dabei der Frequenz und die Achse 25b der Amplitude. Mit dem Bezugszeichen 26 ist die, beispielsweise mittels einer Fourier-Analyse, ermittelte Peak-Frequenz der erfassten Interferenz-Strahlung gekennzeichnet. Aufgrund der Dreiecksmodulation der Wellenlänge des ausgesendeten Laserstrahls 1 ist die Peak-Frequenz 26 abhängig von einer optischen Weglänge 2. Die optische Weglänge 2 (vgl. Figur 1), entspricht dabei einer Distanz, welche der Laserstrahl 1, 1' zwischen dem Oberflächenemitter 3a, 3b und dem Auge 10 zurücklegt. Da der Laserstrahl 1 im ersten Ausführungsbeispiel der Figur 1 direkt auf eine Augenoberfläche 11 des geöffneten Auges 10 eingestrahlt wird, entspricht die optische Weglänge 2 der kürzesten Entfernung zwischen Oberflächenemitter 3a und Augenoberfläche 11. Somit kann bei bekannter Wellenlänge des ausgesendeten Laserstrahls 1 basierend auf der Laser-Feedback-Interferometrie die optische Weglänge 2 ermittelt werden.

Dargestellt ist dabei in Figur 2 ein beispielhaftes Frequenzspektrum 25, welches bei konstanter Bewegung des Auges 10 relativ zum Laserstrahl 1, in diesem Fall bei einer Rotation des Auges 10, aufgezeichnet wird. Bei einer solcher Bewegung erfolgt aufgrund des Doppler-Effekts eine Verschiebung 27 der Peak-Frequenz 26 hin zu einer gestrichelt eingezeichneten verschobenen Peak-Frequenz 26'. Die hierbei vorliegende Dopplerverschiebung der ausgesendeten und der zurückgestreuten Laserstrahlung kann somit anhand des Frequenzspektrums 25 ermittelt werden. Basierend auf dieser Dopplerverschiebung kann die momentane Augengeschwindigkeit der Bewegung des Auges 10 sowie eine Richtung der Bewegung ermittelt werden kann.

Zusätzlich wird ein Signal-Rausch-Verhältnis der zurückgestreuten Strahlung erfasst. Anhand diesem kann beispielsweise eine Reflektivität des Auges 10 ermittelt werden. Die Reflektivität ist beispielsweise unterschiedlich für verschiedene Bereiche des Auges 10. Insbesondere ändert sich die ermittelte Reflektivität, wenn der Laserstrahl 1 unterschiedliche anatomische Bereiche des Auges 10, wie beispielsweise Augenlid 19, Iris 12 oder Retina 14, trifft. Dadurch kann anhand der Reflektivität des Auges 10 abgeschätzt werden, welcher Bereich des Auges 10 gerade vom Laserstrahl 1 bestrahlt wird.

Die beiden Laserstrahlen 1, 1' sind dabei so ausgerichtet, dass ein erster Laserstrahl 1 einen Anteil parallel zu einer ersten horizontalen Rotationsachse 16 des Auges 10 aufweist, um eine erste Augengeschwindigkeit $v\theta$ entlang dieser ersten Rotationsachse 16 erfassen zu können (vgl. Figur 1). Ein zweiter Laserstrahl 1' ist so ausgerichtet, dass dieser einen Anteil parallel zu einer zweiten vertikalen Rotationsachse 15 des Auges 10 aufweist, um eine zweite Augengeschwindigkeit $v\varphi$ entlang dieser zweiten Rotationsachse 15 erfassen zu können. Dadurch können die Augenbewegungen des Auges 10 vollständig und einfach erfasst werden.

Zudem eignet sich diese Erfassung, um einen Augenwinkel $\varepsilon$ in Polarkoordinaten zu berechnen, anhand welchem die Auslenkung des Auges 10 ermittelt und damit, wie weiter unten beschrieben, auf einfache Weise die Augenbewegungen unterschieden werden können. Zudem wird der Betrag der Augengeschwindigkeit entsprechend in Polarkoordinaten ermittelt.

Zusammengefasst werden durch das Einstrahlen des Laserstrahls 1 auf das Auge 10 gleichzeitig die optische Weglänge 2, das Signal-Rausch-Verhältnis, und die Augengeschwindigkeit des Auges 10 erfasst. Die momentanen Werte für diese drei Messgrößen bilden dabei jeweils ein Messsample.

Anhand eines einzelnen Messsamples wird anschließend die Augengeste des Auges 10 erkannt. Im Detail wird das einzelne Messsample analysiert und anhand dessen eine von mehreren vordefinierten Basis-Augengesten 201, 202, 203, 204, 205, 206, 207 identifiziert.

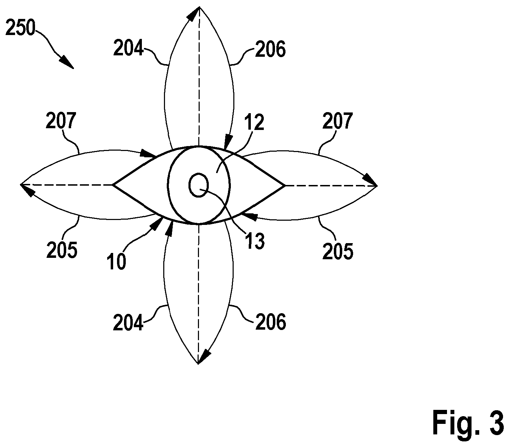

In Figur 3 sind Basis-Augengesten, welche eine Bewegung des geöffneten Auges 10 definieren, vereinfacht dargestellt. Im Detail werden hierbei die folgenden Basis-Augengesten unterschieden: Auge bewegt sich nach oben 204, Auge bewegt sich nach unten 206, Auge bewegt sich nach links 205, und Auge bewegt sich nach rechts 207. Insbesondere wird als die jeweilige Augenbewegung eine Blickbewegung in die entsprechende Richtung angesehen

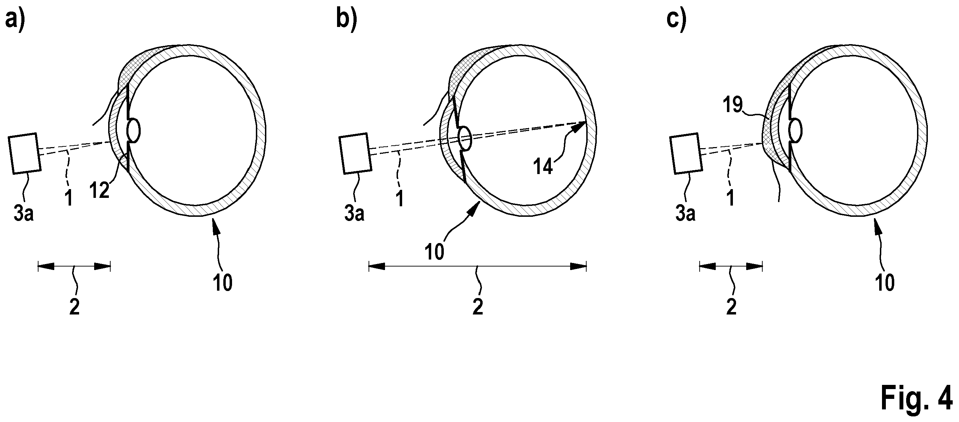

Weiterhin sind in Figur 4 Basis-Zustände, welche basierend auf der optischen Weglänge 2 und/oder basierend auf dem Signal-Rausch-Verhältnis unterschieden werden können, dargestellt. Dabei werden die folgenden Basis-Zustände unterschieden: Laserstrahl 1 trifft auf Augenoberfläche 11 oder Iris 12 (vgl. Figur 4a), Laserstrahl 1 dringt durch Pupille in das Auge 10 ein und trifft auf Retina 14 (vgl. Figur 4b), und Laserstrahl 1 trifft auf Augenlid 19 (vgl. Figur 4c). Insbesondere kann dabei durch Unterscheidung dieser drei Basis-Zustände ermittelt werden, ob das Auge 10 offen oder durch das Augenlid 19 geschlossen ist.

Diese Unterscheidung wird basierend auf anatomischen Randbedingungen eines menschlichen Auges 10 durchgeführt. Im Detail ergeben sich für die dargestellten Basis-Zustände signifikant unterschiedliche optische Weglängen 2, welche sich durch die vorgegebenen anatomischen Randbedingungen des menschlichen Auges 10 unterscheiden. Somit kann beispielsweise durch Vergleich der jeweiligen optischen Weglänge 2 auf einfache Weise ermittelt werden, welcher der Basis-Zustände gerade vorliegt.

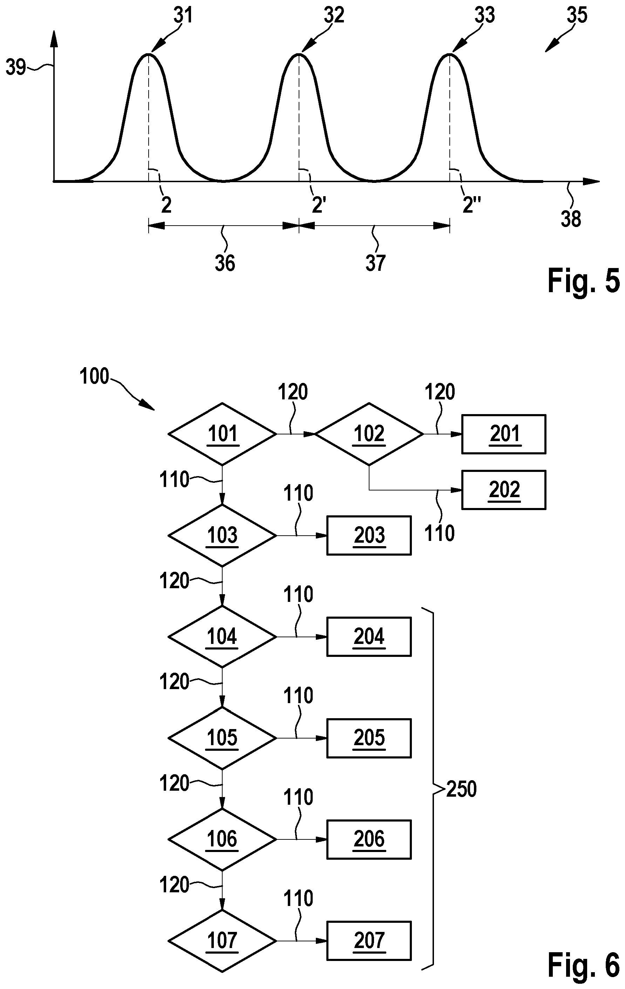

Figur 5 zeigt ein beispielhaftes Frequenzspektrum 35 für die optischen Weglängen 2, 2', 2" für jeden dieser drei Basis-Zustände. Die Achse 38 entspricht dabei der ermittelten optischen Weglänge und die Achse 39 der Häufigkeit des Auftretens dieser gemessenen optischen Weglängen. Mit den Bezugszeichen 31, 32, 33 sind die ermittelten Peak-Frequenzen gekennzeichnet, die sich für die unterschiedlichen Basis-Zustände ergeben können. Dabei sind von links nach rechts die Basis-Zustände Laserstrahl trifft auf Augenlid 31, Laserstrahl trifft auf Augenoberfläche oder Iris 32, und Laserstrahl trifft auf Retina 33 beispielhaft dargestellt. Anhand der jeweiligen Peak-Frequenz kann die entsprechende optische Weglänge 2, 2', 2" abgeschätzt werden. Differenzen 36, 37 zwischen diesen optischen Weglänge 2 und 2' bzw. 2' und 2" sind dabei durch die anatomischen Randbedingungen Dicke des Augenlids 19 bzw. Augendurchmesser vorgegeben.

Die Differenzen 36, 37 sind daher unabhängig von Änderungen einer Entfernung der Oberflächenemitter 3a, 3b vom Auge. Das heißt, wenn beispielsweise die Oberflächenemitter 3a, 3b sich durch ein Rutschen einer Datenbrille, an welcher Blickerfassungsvorrichtung 20 installiert sein kann, vom Auge 10 entfernen, bleiben die Differenzen 36, 37 im Wesentlichen gleich, sodass die drei Basis-Zustände steht auf einfache Weise voneinander unterschieden werden können.

Die Ermittlung, welche der vordefinierten Basis-Augengesten 201, 202, 203, 204, 205, 206, 207 gerade ausgeführt wird oder wurde, wird anhand eines Entscheidungsbaums 100, der in der Figur 6 dargestellt ist, ermittelt. In den mittels rautenförmiger Symbole dargestellten Verfahrensschritten wird jeweils ein Vergleich, insbesondere in Form von größer, kleiner oder gleich, zumindest eines der Messwerte des Messsamples mit jeweiligen vordefinierten Werten durchgeführt. Je nachdem, ob dieser Vergleich positiv (Bezugszeichen 110) oder negativ (Bezugszeichen 120) ausfällt, erfolgt entweder ein weiterer Vergleich, oder es wird eine der Basis-Augengesten (rechteckige Symbole) festgestellt.

Die Verwendung des Entscheidungsbaums 100 wird nachfolgend im Detail beschrieben. Begonnen wird mit dem Vergleichsoperator 101, in welchem der Betrag der momentanen Augengeschwindigkeit mit einer vordefinierten ersten Geschwindigkeit verglichen wird. Ist der Betrag der Augengeschwindigkeit kleiner oder gleich der ersten Augengeschwindigkeit so ist der Vergleichsoperator 101 negativ 120 und es folgt der nächste Vergleichsoperator 102, in dem die optische Weglänge 2 und/oder das Signal-Rausch-Verhältnis interpretiert wird. Ergibt der Vergleichsoperator 102, dass optische Weglänge 2 und/oder Signal-Rausch-Verhältnis einem charakteristischen Wert entspricht, der sich beim Auftreffen des Laserstrahls 1, 1' auf das Augenlid 19 ergibt (vgl. Figur 4a), so wird die Basis-Augengeste "geschlossenes Auge" 202 erkannt. Bei negativem Vergleichsoperator 102 wird ein "Stillstand" 201 des Auges 10 erkannt.

Wenn der erste Vergleichsoperator 101 positiv 110 ist, so wird als nächstes der Vergleichsoperator 103 ausgeführt, welche im Wesentlichen identisch zum Vergleichsoperator 102 ist, das heißt, es wird ermittelt, ob optische Weglänge 2 und/oder Signal-Rausch-Verhältnis ein Auftreffen des Laserstrahl 1 auf das Augenlid 19 kennzeichnen. Trifft dies zu, so wird die Basis-Augengeste "Blinzeln" 203 erkannt.

Ist der Vergleichsoperator 103 negativ 120, kann bereits erkannt werden, dass bei geöffnetem Auge 10 eine Bewegung 250 des Auges 10 vorliegt. Diese Bewegung 250 kann durch weitere Vergleichsoperatoren 104, 105, 106, 107, in welchen jeweils der momentane ermittelte Augenwinkel $\varepsilon$ analysiert wird, genauer identifiziert werden. Im Detail werden dabei die folgenden Basis-Augengesten erkannt:

- Auge bewegt sich nach oben 204, wenn der Augenwinkel $\varepsilon$ größer gleich 45° und kleiner als 135° ist (Vergleichsoperator 104),
- Auge bewegt sich nach unten 205, wenn der Augenwinkel $\varepsilon$ größer gleich 225° und kleiner als 315° ist (Vergleichsoperator 105),
- Auge bewegt sich nach links 206, wenn der Augenwinkel $\varepsilon$ größer gleich 135° und kleiner als 225° ist (Vergleichsoperator 106),
- Auge bewegt sich nach rechts 207, wenn der Augenwinkel $\varepsilon$ größer gleich 315° oder kleiner als 45° ist (Vergleichsoperator 107).

Der Entscheidungsbaum 100 bietet somit eine besonders einfache und mit geringem Rechenaufwand durchführbare Analyse des Messsamples, um die vordefinierten Basis-Augengesten 201, 202, 203, 204, 205, 206, 207, zu erkennen.

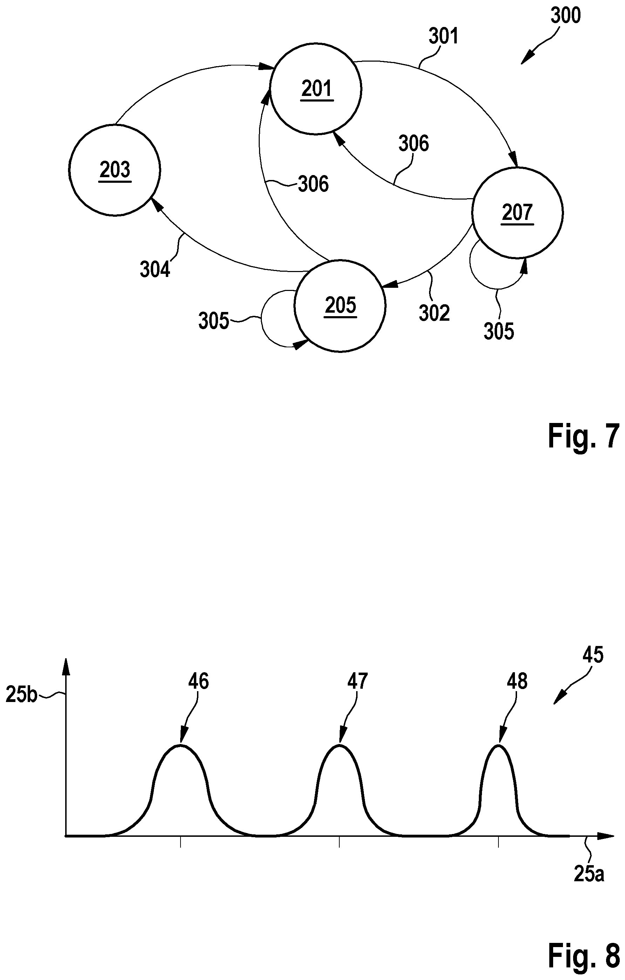

Eine Weiterbildung des Verfahrens kann dadurch erreicht werden, dass ein Zustandsautomat 300, der in der Figur 7 beispielhaft abgebildet ist, verwendet wird, um komplexe Augengesten zu erkennen. Eine komplexe Augengeste ist dabei durch eine vordefinierte Reihenfolge nacheinander ausgeführter Basis-Augengesten definiert.

In der Figur 7 ist dabei ein Zustandsautomat 300 zur Erkennung der komplexen Augengeste "Auge bewegt sich nach rechts 207; Auge bewegt sich nach links 205; Blinzeln 203" dargestellt. Die Kreise kennzeichnen dabei Zustände in denen die entsprechenden Basis-Augengesten, analog zur Figur 6, erkannt wurden. Die Verbindungen kennzeichnen die entsprechenden Blickbewegungen des Nutzers, das heißt, Blick nach rechts 301, Blick nach links 302, und Schließen des Augenlids 19.

Sofern ausgehend von einem der Zustände 207 oder 206 eine andere als die zur Durchführung der komplexen Augengeste passende Basis-Augengeste ausgeführt und erkannt wird, erfolgt entweder ein Verweilen 305 im aktuellen Zustand, wenn keine Augenbewegung erfolgt, oder wenn dieselbe Augengeste zur Erreichung dieses Zustands wiederholt durchgeführt wird. Oder falls eine andere Basis-Augengeste ausgeführt wird, erfolgt eine Rückkehr 306 zum Ausgangs-Zustand 201.

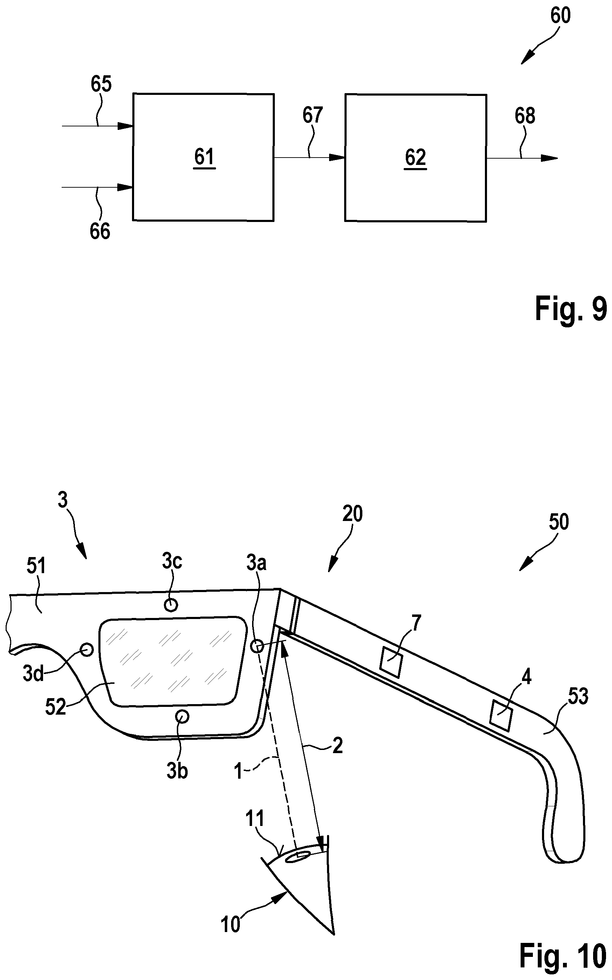

Eine weitere mögliche Weiterbildung des Verfahrens ist ein zusätzliches Kalibrieren, welches beispielsweise zum Herausfiltern nicht plausibler und damit unter Umständen fehlerhafter Messsamples verwendet werden kann. Dies wird in Bezug auf die Figuren 8 und 9 beschrieben.

Figur 8 zeigt ein beispielhaftes Frequenzspektrum 45 für jeweilige Signal-Rausch-Verhältnisse für jeden der drei oben genannten Basis-Zustände. Die Achse 25a entspricht dabei der Frequenz und die Achse 25b der Amplitude. Mit den Bezugszeichen 46, 47, 48 sind die jeweils für die drei Basis-Zustände ermittelten Peak-Frequenzen gekennzeichnet, also Laserstrahl trifft auf Augenlid 46, Laserstrahl trifft auf Augenoberfläche oder Iris 47, Laserstrahl trifft auf Retina 48.

Das in der Figur 8 dargestellte beispielhafte Frequenzspektrum kann einmalig in einem Kalibrierungsschritt erfasst werden, um jeweils ein Kalibrier-Signal-Rausch-Verhältnis 46, 47, 48 für jeden der drei Basis-Zustände zu erhalten. Das Signal-Rausch-Verhältnis ist unabhängig von der Distanz der Oberflächenemitter 3a, 3b zum Auge 10. Dadurch kann das ermittelte Messsample anhand der Kalibrier-Signal-Rausch-Verhältnisse 46, 47, 48 plausibilisiert werden.

Dies erfolgt als Teil eines in Figur 9 dargestellten Kalibrier-Verfahrens 60. Das Kalibrier-Verfahren 60 umfasst den Schritt Plausibilisieren 61 des ermittelten Messsamples. Hierbei werden die momentanen Werte für die optische Weglänge 2 und das Signal-Rausch-Verhältnis an den Eingängen 65 bzw. 66 dieses Schritts bereitgestellt. Das momentane Signal-Rausch-Verhältnis wird dabei mit den Kalibrier-Signal-Rausch-Verhältnissen 46, 47, 48 abgeglichen. Sofern das momentane Signal-Rausch-Verhältnis zumindest weitgehend mit einem der Kalibrier-Signal-Rausch-Verhältnisse 46, 47, 48 übereinstimmt, wird das aktuelle Messsample als plausibel angesehen und weiterverarbeitet, ansonsten wird das aktuelle Messsample als fehlerhaft angesehen und verworfen.

Falls das Messsample plausibel ist, wird die optische Weglänge weiterverarbeitet und dem Eingang 67 des nächsten Schritts 62 zugeführt, in welchem die momentane optische Weglänge einem der drei Basis-Zustände, beispielsweise basierend auf der Figur 5, zugeordnet wird. Am Ausgang 68 wird dementsprechend die zugeordnete optische Weglänge oder eine Information darüber, welcher der drei Basis-Zustand gerade vorliegt, ausgegeben.

Eine Anwendung des Verfahrens und eine Verwendung der Blickerfassungsanordnung 20 in einer Datenbrille 50 ist in Figur 10 dargestellt.

Die Datenbrille 50 umfasst ein Brillenglas 52, ein Brillengestell 51, in welchem das Brillenglas 52 aufgenommen ist, und einen Brillenbügel 53, welcher zur Halterung der Datenbrille 50 an einem Kopf eines Benutzers dient. Die Datenbrille 50 ist somit vorgesehen, um am Kopf des Benutzers getragen zu werden.

Die Datenbrille 50 umfasst die Blickerfassungsanordnung 20. Die Steuervorrichtung 4 ist für eine kompakte Konstruktion der Datenbrille 50 im Brillenbügel 53 angeordnet.

Die Oberflächenemitter 3a, 3b der Laservorrichtung 3 sind am Brillengestell 51 rings um das Brillenglas 52 verteilt angeordnet.

Weiterhin kann die Datenbrille 50 eine Ein- und/oder Ausgabevorrichtung 7 umfassen, welche eingerichtet ist, eine Ausgabe an den Benutzer auszugeben. Die Ein- und/oder Ausgabevorrichtung 7 weist dabei eine Projektionseinheit auf, welche eingerichtet ist, ein Bild auf eine Retina des Auges 10 zu projizieren. Die Projektionseinheit kann beispielsweise zur Darstellung einer erweiterten oder virtuellen Realität (auch: augmented reality AR bzw. virtual reality) verwendet werden. Vorzugsweise ist die Projektionseinheit mit der Steuervorrichtung 4 gekoppelt, wobei die Steuervorrichtung 4 eingerichtet ist, die Projektionseinheit in Abhängigkeit der ermittelten Augengesten zu betätigen.

**Patentansprüche**

1. Verfahren zur Erkennung von Augengesten eines Auges (10), umfassend die Schritte:

    - Einstrahlen von zumindest einem Laserstrahl (1) auf das Auge (10),
    - Ermitteln eines einzelnen Messsamples mit momentanen Werten für:

        - eine optische Weglänge (2) des ausgesendeten Laserstrahls (1);
        - ein Signal-Rausch-Verhältnis einer vom Auge (10) zurückgestreuten Strahlung;
        - eine Augengeschwindigkeit des Auges (10); und

    - Erkennen einer Augengeste basierend auf dem einzelnen Messsample,
    - wobei die optische Weglänge (2) basierend auf Laser-Feedback-Interferometrie der ausgesendeten Laserstrahlung mit der vom Auge (10) zurückgestreuten Strahlung ermittelt wird, und
    - wobei die Augengeschwindigkeit basierend auf einer mittels der Laser-Feedback-Interferometrie ermittelten Dopplerverschiebung der ausgesendeten und der zurückgestreuten Strahlung ermittelt wird.

2. Verfahren nach Anspruch 1, wobei vordefinierte Basis-Augengesten (201, 202, 203, 204, 205, 206, 207) basierend auf einer Interpretation des Messsamples mittels eines Entscheidungsbaums (100) erkannt werden.

3. Verfahren nach Anspruch 2, wobei vordefinierte komplexe Augengesten mittels eines Zustandsautomats (300) erkannt werden, und wobei eine komplexe Augengeste mehrere aufeinanderfolgende Basis-Augengesten (201, 202, 203, 204, 205, 206, 207) aufweist.

4. Verfahren nach einem der vorhergehenden Ansprüche, wobei basierend auf der optischen Weglänge (2) und/oder basierend auf dem Signal-Rausch-Verhältnis die folgenden vordefinierten Basis-Zustände unterschieden werden:

   - Laserstrahl trifft auf Augenlid (19),
   - Laserstrahl trifft auf Augenoberfläche (11) oder Iris (12),
   - Laserstrahl trifft auf Retina (14).

5. Verfahren nach Anspruch 4, wobei die vordefinierten Basis-Zustände zusätzlich basierend auf anatomischen Randbedingungen eines menschlichen Auges (10) unterschieden werden.

6. Verfahren nach einem der Ansprüche 4 oder 5, ferner umfassend die Schritte:

   - Kalibrieren durch Aufzeichnen jeweils eines Kalibrier-Signal-Rausch-Verhältnisses (46, 47, 48) für jeden der drei Basis-Zustände, und
   - Plausibilisieren (61) des ermittelten Messsamples durch Abgleichen des aktuellen Signal-Rausch-Verhältnisses mit den Kalibrier-Signal-Rausch-Verhältnissen.

7. Verfahren nach einem der vorhergehenden Ansprüche, ferner umfassend die Schritte:

   - Vergleichen der Augengeschwindigkeit mit einer ersten Geschwindigkeit, und
   - Erkennen eines Stillstands (201) des Auges (10) oder eines durch ein Augenlid (19) geschlossenen (202) Auges (10) wenn die Augengeschwindigkeit kleiner oder gleich der ersten Geschwindigkeit ist.

8. Verfahren nach einem der vorhergehenden Ansprüche, ferner umfassend die Schritte:

   - Vergleichen der Augengeschwindigkeit mit einer ersten Geschwindigkeit, und
   - Erkennen einer Bewegung (250) des Auges (10) oder eines Blinzelns (203) wenn die Augengeschwindigkeit größer als die erste Geschwindigkeit ist.

9. Verfahren nach Anspruch 8, ferner umfassend die Schritte:

   - Vergleichen der Augengeschwindigkeit mit einer zweiten Geschwindigkeit, und
   - Erkennen einer langsamen Augenbewegung des Auges (10), wenn die Augengeschwindigkeit kleiner oder gleich der zweiten Geschwindigkeit ist, oder
   - Erkennen einer schnellen Augenbewegung des Auges (10), wenn die Augengeschwindigkeit größer als die zweite Geschwindigkeit ist.

10. Verfahren nach einem der vorhergehenden Ansprüche, wobei zwei Laserstrahlen (1, 1') auf das Auge (10) eingestrahlt werden, wobei ein erster Laserstrahl (1) so auf das Auge (10) eingestrahlt wird, dass dieser einen Anteil parallel zu einer ersten Rotationsachse (16) des Auges (10) aufweist, um eine erste Augengeschwindigkeit $v\theta$ entlang der ersten Rotationsachse (16) zu erfassen, und wobei ein zweiter Laserstrahl (1') so auf das Auge (10) eingestrahlt wird, dass dieser einen Anteil parallel zu einer zweiten Rotationsachse (15) des Auges (10) aufweist, um eine zweite Augengeschwindigkeit $v\varphi$ entlang der zweiten Rotationsachse (15) zu erfassen.

11. Verfahren nach Anspruch 10, ferner umfassend den Schritt:

   - Ermitteln eines Augenwinkels $\varepsilon$ basierend auf der Gleichung:

$$\varepsilon = \arctan\left(\frac{v\theta}{v\varphi}\right),$$

mit der ersten Augengeschwindigkeit $v\theta$ und der zweiten Augengeschwindigkeit $v\varphi$.

12. Verfahren nach Anspruch 11, wobei anhand des Augenwinkels ε die folgenden Augengesten unterschieden werden:

- Auge (10) bewegt sich nach oben (204), wenn der Augenwinkel ε größer gleich 45° und kleiner als 135° ist,
- Auge (10) bewegt sich nach unten (206), wenn der Augenwinkel ε größer gleich 225° und kleiner als 315° ist,
- Auge (10) bewegt sich nach links (205), wenn der Augenwinkel ε größer gleich 135° und kleiner als 225° ist,
- Auge (10) bewegt sich nach rechts (207), wenn der Augenwinkel ε größer gleich 315° oder kleiner als 45° ist.

13. Verfahren nach einem der Ansprüche 10 bis 12, ferner umfassend den Schritt:

- Ermitteln eines Betrags v der Augengeschwindigkeit basierend auf der Gleichung:

$$v = \sqrt{v\theta^2 + v\varphi^2}\,,$$

mit der ersten Augengeschwindigkeit vθ und der zweiten Augengeschwindigkeit vφ.

14. Verfahren nach einem der vorhergehenden Ansprüche, wobei das Verfahren zum Betreiben einer Datenbrille (50) verwendet wird, und ferner den Schritt umfasst:

- Erkennen eines Bewegens der Datenbrille (50) relativ zum Auge (10) basierend auf den optischen Weglängen (2) von zumindest zwei Messsamples.

15. Datenbrille, umfassend eine Blickerfassungsanordnung (20) zum Ermitteln einer Augenbewegung eines Auges (10),

wobei die Blickerfassungsanordnung (20) eine Laservorrichtung (3), mit integrierter Fotodiode, welche eingerichtet ist, zumindest einen Laserstrahl (1) auf das Auge (10) einzustrahlen, und eine Steuervorrichtung (4) welche eingerichtet ist, die Laservorrichtung (3) zu betätigen, aufweist, und
wobei die Datenbrille (50) eingerichtet ist, das Verfahren nach einem der vorhergehenden Ansprüche auszuführen.

## Claims

1. Method for detecting eye gestures of an eye (10), comprising the steps of:

- irradiating at least one laser beam (1) onto the eye (10),
- determining an individual measurement sample with instantaneous values for:

- an optical path length (2) of the emitted laser beam (1);
- a signal-to-noise ratio of a radiation scattered back by the eye (10);
- an eye speed of the eye (10); and

- detecting an eye gesture based on the individual measurement sample,
- wherein the optical path length (2) is determined based on laser feedback interferometry of the emitted laser radiation with the radiation scattered back by the eye (10), and
- wherein the eye speed is determined based on a Doppler shift, determined by means of the laser feedback interferometry, of the emitted radiation and the radiation scattered back.

2. Method according to Claim 1, wherein predefined basic eye gestures (201, 202, 203, 204, 205, 206, 207) are detected based on an interpretation of the measurement sample by means of a decision tree (100).

3. Method according to Claim 2, wherein predefined complex eye gestures are detected by means of a state machine (300), and wherein a complex eye gesture has a plurality of successive basic eye gestures (201, 202, 203, 204, 205, 206, 207).

4. Method according to one of the preceding claims, wherein the following predefined basic states are distinguished based on the optical path length (2) and/or based on the signal-to-noise ratio:

- laser beam impinges on the eyelid (19),
- laser beam impinges on the eye surface (11) or iris (12),
- laser beam impinges on the retina (14).

5. Method according to Claim 4, wherein the predefined basic states are additionally distinguished based on anatomical boundary conditions of a human eye (10).

6. Method according to either of Claims 4 and 5, further comprising the steps of:

   - calibrating by recording a respective calibration signal-to-noise ratio (46, 47, 48) for each of the three basic states, and
   - checking the plausibility (61) of the determined measurement sample by comparing the current signal-to-noise ratio with the calibration signal-to-noise ratios.

7. Method according to one of the preceding claims, further comprising the steps of:

   - comparing the eye speed with a first speed, and
   - detecting a standstill (201) of the eye (10) or of an eye (10) closed (202) by an eyelid (19) if the eye speed is less than or equal to the first speed.

8. Method according to one of the preceding claims, further comprising the steps of:

   - comparing the eye speed with a first speed, and
   - detecting a movement (250) of the eye (10) or a blinking (203) if the eye speed is greater than the first speed.

9. Method according to Claim 8, further comprising the steps of:

   - comparing the eye speed with a second speed, and
   - detecting a slow eye movement of the eye (10) if the eye speed is less than or equal to the second speed, or
   - detecting a fast eye movement of the eye (10) if the eye speed is greater than the second speed.

10. Method according to one of the preceding claims, wherein two laser beams (1, 1') are irradiated onto the eye (10), wherein a first laser beam (1) is irradiated onto the eye (10) such that it has a component parallel to a first axis of rotation (16) of the eye (10) in order to detect a first eye speed $v\theta$ along the first axis of rotation (16), and wherein a second laser beam (1') is irradiated onto the eye (10) such that it has a component parallel to a second axis of rotation (15) of the eye (10) in order to detect a second eye speed $v\varphi$ along the second axis of rotation (15).

11. Method according to Claim 10, further comprising the step of:

   - determining an eye angle $\varepsilon$ based on the equation:

$$\varepsilon = \arctan\left(\frac{v\theta}{v\varphi}\right),$$

   with first eye speed $v\theta$ and second eye speed $v\varphi$.

12. Method according to Claim 11, wherein the following eye gestures are distinguished on the basis of the eye angle $\varepsilon$:

   - eye (10) moves upwards (204) if the eye angle $\varepsilon$ is greater than or equal to 45° and less than 135°,
   - eye (10) moves downwards (206) if the eye angle $\varepsilon$ is greater than or equal to 225° and less than 315°,
   - eye (10) moves to the left (205) if the eye angle $\varepsilon$ is greater than or equal to 135° and less than 225°,
   - eye (10) moves to the right (207) if the eye angle $\varepsilon$ is greater than or equal to 315° or less than 45°.

13. Method according to one of Claims 10 to 12, further comprising the step of:

   - determining an absolute value v of the eye speed based on the equation:

$$v = \sqrt{v\theta^2 + v\varphi^2}\,,$$

with first eye speed vθ and second eye speed vφ.

14. Method according to one of the preceding claims, wherein the method is used for operating data glasses (50), and further comprises the step of:

  - detecting a movement of the data glasses (50) relative to the eye (10) based on the optical path lengths (2) of at least two measurement samples.

15. Data glasses, comprising a gaze detection arrangement (20) for determining an eye movement of an eye (10),

  wherein the gaze detection arrangement (20) has a laser device (3), with integrated photodiode, which is configured to irradiate at least one laser beam (1) onto the eye (10), and a control device (4) which is configured to actuate the laser device (3), and
  wherein the data glasses (50) are configured to carry out the method according to one of the preceding claims.

**Revendications**

1. Procédé de reconnaissance de gestes oculaires d'un œil (10), comprenant les étapes suivantes :

  - irradiation d'au moins un rayon laser (1) sur l'œil (10),
  - détermination d'un échantillon de mesure individuel avec des valeurs instantanées pour :

    - une longueur de trajet optique (2) du rayon laser émis (1) ;
    - un rapport signal sur bruit d'un rayonnement rétrodiffusé par l'œil (10) ;
    - une vitesse oculaire de l'œil (10) ; et

  - reconnaissance d'un geste oculaire sur la base de l'échantillon de mesure individuel,
  - la longueur de trajet optique (2) étant déterminée sur la base d'une interférométrie à rétroaction laser du rayonnement laser émis avec le rayonnement rétrodiffusé par l'œil (10), et
  - la vitesse oculaire étant déterminée sur la base d'un décalage Doppler, déterminé au moyen de l'interférométrie à rétroaction laser, du rayonnement émis et du rayonnement rétrodiffusé.

2. Procédé selon la revendication 1, des gestes oculaires de base prédéfinis (201, 202, 203, 204, 205, 206, 207) étant reconnus sur la base d'une interprétation de l'échantillon de mesure au moyen d'un arbre de décision (100).

3. Procédé selon la revendication 2, des gestes oculaires complexes prédéfinis étant reconnus au moyen d'un automate fini (300), et un geste oculaire complexe présentant plusieurs gestes oculaires de base successifs (201, 202, 203, 204, 205, 206, 207).

4. Procédé selon l'une quelconque des revendications précédentes, les états de base prédéfinis suivants étant distingués sur la base de la longueur de trajet optique (2) et/ou sur la base du rapport signal sur bruit :

  - le rayon laser frappe la paupière (19),
  - le rayon laser frappe la surface de l'oeil (11) ou l'iris (12),
  - le rayon laser frappe la rétine (14).

5. Procédé selon la revendication 4, les états de base prédéfinis étant en outre distingués sur la base de conditions marginales anatomiques d'un œil humain (10).

6. Procédé selon l'une des revendications 4 ou 5, comprenant en outre les étapes suivantes :

  - calibrage par enregistrement respectivement d'un rapport signal sur bruit de calibrage (46, 47, 48) pour chacun des trois états de base, et
  - plausibilisation (61) de l'échantillon de mesure déterminé par comparaison du rapport signal sur bruit actuel avec les rapports signal sur bruit de calibrage.

**7.** Procédé selon l'une quelconque des revendications précédentes, comprenant en outre les étapes suivantes :

- comparaison de la vitesse oculaire avec une première vitesse, et
- reconnaissance d'un arrêt (201) de l'œil (10) ou d'un œil (10) fermé (202) par une paupière (19) lorsque la vitesse oculaire est inférieure ou égale à la première vitesse.

**8.** Procédé selon l'une quelconque des revendications précédentes, comprenant en outre les étapes suivantes :

- comparaison de la vitesse oculaire avec une première vitesse, et
- reconnaissance d'un mouvement (250) de l'œil (10) ou d'un clignement (203) lorsque la vitesse oculaire est supérieure à la première vitesse.

**9.** Procédé selon la revendication 8, comprenant en outre les étapes suivantes :

- comparaison de la vitesse oculaire avec une deuxième vitesse, et
- reconnaissance d'un mouvement oculaire lent de l'œil (10) lorsque la vitesse oculaire est inférieure ou égale à la deuxième vitesse, ou
- reconnaissance d'un mouvement oculaire rapide de l'œil (10) lorsque la vitesse oculaire est supérieure à la deuxième vitesse.

**10.** Procédé selon l'une quelconque des revendications précédentes, deux faisceaux laser (1, 1') étant irradiés sur l'œil (10), un premier faisceau laser (1) étant irradié sur l'œil (10) de telle sorte qu'il présente une partie parallèle à un premier axe de rotation (16) de l'œil (10), afin de détecter une première vitesse oculaire $v\theta$ le long du premier axe de rotation (16), et

un deuxième faisceau laser (1') étant irradié sur l'œil (10) de telle sorte qu'il présente une partie parallèle à un deuxième axe de rotation (15) de l'œil (10), afin de détecter une deuxième vitesse oculaire $v\varphi$ le long du deuxième axe de rotation (15).

**11.** Procédé selon la revendication 10, comprenant en outre l'étape suivante :

- détermination d'un angle oculaire $\varepsilon$ sur la base de l'équation :

$$\varepsilon = \arctan\left(\frac{v\theta}{v\varphi}\right),$$

avec la première vitesse oculaire $v\theta$ et la deuxième vitesse oculaire $v\varphi$.

**12.** Procédé selon la revendication 11, les gestes oculaires suivants étant distingués à l'aide de l'angle oculaire $\varepsilon$ :

- l'œil (10) se déplace vers le haut (204) lorsque l'angle oculaire $\varepsilon$ est supérieur ou égal à 45° et inférieur à 135°,
- l'œil (10) se déplace vers le bas (206) lorsque l'angle oculaire $\varepsilon$ est supérieur ou égal à 225° et inférieur à 315°,
- l'œil (10) se déplace vers la gauche (205) lorsque l'angle oculaire $\varepsilon$ est supérieur ou égal à 135° et inférieur à 225°,
- l'œil (10) se déplace vers la droite (207) lorsque l'angle oculaire $\varepsilon$ est supérieur ou égal à 315° ou inférieur à 45°.

**13.** Procédé selon l'une quelconque des revendications 10 à 12, comprenant en outre l'étape suivante :

- détermination d'une valeur absolue v de la vitesse oculaire sur la base de l'équation :

$$v = \sqrt{v\theta^2 + v\varphi^2},$$

avec la première vitesse oculaire $v\theta$ et la deuxième vitesse oculaire $v\varphi$.

**14.** Procédé selon l'une quelconque des revendications précédentes, le procédé étant utilisé pour faire fonctionner des lunettes de données (50) et comprenant en outre l'étape suivante :

- reconnaissance d'un mouvement des lunettes de données (50) par rapport à l'œil (10) sur la base des longueurs de trajet optique (2) d'au moins deux échantillons de mesure.

15. Lunettes de données, comprenant un agencement de détection du regard (20) pour déterminer un mouvement oculaire d'un œil (10),

l'agencement de détection du regard (20) présentant un dispositif laser (3), avec une photodiode intégrée, qui est conçu pour irradier au moins un rayon laser (1) sur l'œil (10), et un dispositif de commande (4) qui est conçu pour actionner le dispositif laser (3), et
les lunettes de données (50) étant conçues pour réaliser le procédé selon l'une quelconque des revendications précédentes.

**Fig. 1**

**Fig. 2**

Fig. 3

Fig. 4

Fig. 5

Fig. 6

Fig. 7

Fig. 8

60

65 →
66 →

61 → 67 → 62 → 68 →

Fig. 9

3
51
20
50
3c 3a
3d
52
3b
1 2
11
10
7
4
53

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020043472 A1